# EUROPÄISCHE PATENTSCHRIFT

(11) **EP 1 205 324 B1**
(45) Veröffentlichungstag und Bekanntmachung des Hinweises auf die Patenterteilung: **29.11.2006**
(21) Anmeldenummer: 01125512.2
(22) Anmeldetag: 25.10.2001
(51) Int. Cl.: B60J 7/06

(54) **Aufbausystem für Planverdecke**
Mounting system for tarpaulins
Système de montage pour bâches

(30) Priorität: 11.11.2000 DE 10056052
(43) Veröffentlichungstag der Anmeldung: 15.05.2002
(73) Patentinhaber: Trailer System Engineering GmbH & Co. KG, 72365 Ratshausen (DE)
(72) Erfinder: Eberle, Reinhard, 89077 Ulm (DE)
(74) Vertreter: Weber, Gerhard

(56) Entgegenhaltungen:
- EP-A- 0 069 391
- EP-A- 0 421 554
- EP-A- 0 677 410
- FR-A- 2 610 574
- FR-A- 2 653 478

## Beschreibung

Die Erfindung betrifft ein Aufbausystem für Verdecke, insbesondere für Planenverdecke von Lastkraftwagenaufbauten auf Zugmaschinen, Aufliegern, Anhängern etc.

Ein solches Aufbausystem gemäß der Einführung des Anspruchs 1 und den Merkmalen a), b) und e1) ist zum Beispiel aus der FR-A-2 653 478 bekannt.

Je nach Einsatzfall können bei derartigen Verdecken faltbare Planenverdecke (Schiebeverdecke) oder feste Verdecke, auch mit Planen, vorgesehen sein. Die faltbaren Planenverdecke ermöglichen die Öffnung des abgedeckten Frachtraums nach oben und erlauben dadurch eine Be- und Entladung auch von oben, sind aber gegenüber den festen Verdecken konstruktiv aufwendiger.

Aus einer Firmenschrift der Firma AL-KO Kober ist ein Aufbausystem namens Magnum bekannt, bei welchem der Frachtraum eines Lastkraftwagenaufbaus durch teleskopierbare Querträger überspannt ist. Für Faltverdecke sind die Querträger auf Ansatzstutzen von in Längsträgern verfahrbaren Rollwagen aufsteckbar und mittels Schrauben festklemmbar.

Für die Bildung von Festverdecken mit nicht verschiebbaren Querträgern sind Winkelstücke vorgesehen, welche in gleicher Weise wie die Laufwagen mit den Querträgern verbindbar sind. Die Winkelstücke können durch Verschrauben mit in einem seitlichen Führungskanal der Längsträger eingesetzten Platten in wählbarer Position auf dem Längsträger festgeklemmt werden.

Der vorliegenden Erfindung liegt die Aufgabe zugrunde, ein weiter verbessertes Aufbausystem für Verdecke anzugeben, welches in kostengünstiger Weise sowohl für Faltverdecke als auch für Festverdecke geeignet ist.

Die Erfindung ist im Patentanspruch 1 beschrieben. Die abhängigen Ansprüche enthalten vorteilhafte Ausgestaltungen und Weiterbildungen der Erfindung.

Ein wesentlicher Vorteil der Erfindung ist darin zu sehen, daß durch die Vereinigung der ersten Vorrichtungen zur Aufnahme von Rollen und der zweiten Vorrichtungen zur Aufnahme von Befestigungselementen in einer einzigen Trägerkonsolenform sowohl die Anzahl der bei der Montage vorliegenden Teile als auch die Anzahl unterschiedlicher Teile sehr gering gehalten werden kann. Insbesondere können sowohl für Festverdecke als auch für Faltverdecke fertige Einheiten aus Trägerkonsolen und Querträgern vorgefertigt werden, welche zudem für beide Anwendungsfälle identische Formen aufweisen. Neben der Kosteneinsparung durch Verlagerung von ansonsten bei der Montage vorzunehmenden Zusammenbaumaßnahmen in eine weitgehend automatisierbare Vorfertigung ergeben sich Vorteile dahingehend, daß bei Vorfertigung gleicher Einheiten aus Trägerkonsolen und Querträgern die Einzelteile mit hoher Festigkeit, insbesondere auch formschlüssig verbunden werden können, und daß Zusammenbaufehler, wie sie beispielsweise bei Handmontage teleskopierbarer Träger auftreten können, zuverlässig vermeidbar sind.

Die Fertigstellung einer Verdeckanordnung erfolgt mit jeweils gleichen Einheiten aus Querträgern und Trägerkonsolen dann entweder für Faltverdeckanordnungen durch Ergänzung dieser Einheiten um die Rollen und Einführung in die Laufkanäle der Längsträger oder für Festverdeckanordnungen durch Fixieren der Trägerkonsolen auf den Längsträgern mittels in die zweiten Vorrichtungen und die Befestigungsflächen der Längsträger eingreifender Befestigungselemente.

Die ersten Vorrichtungen zur Aufnahme von Rollen sind gemäß einer ersten Ausführung beispielsweise als erste Durchbrüche in den Trägerkonsolen ausgeführt, in welchen für Faltverdeckanordnungen Lagerachsen mit Rollen befestigt werden können. In anderer Ausführung können solche Lagerachsen bereits in den Einheiten von Trägerkonsolen und Querträgern vormontiert enthalten sein und die ersten Vorrichtungen zur Aufnahme der Rollen bilden, insbesondere als Gleitlagerachsen, auf welche die Rollen lediglich aufzustecken sind.

Die Rollen sind in an sich bekannter Weise in Laufkanälen der Längsträger geführt, wobei vorzugsweise an jedem Längsträger zwei um 90° um die Längsrichtung versetzt ausgerichtete Laufkanäle vorgesehen sind und entsprechend an den Trägerkonsolen Rollen in zwei um 90° versetzten Achsrichtungen vorgesehen sind.

Die zweiten Vorrichtungen sind insbesondere als zweite Durchbrüche in den Trägerkonsolen ausgeführt, deren Position der Befestigungsfläche des Längsträgers gegenüber liegt. Die Befestigungsfläche auf dem Längsträger zur Herstellung einer festen Verbindung zwischen Längsträger und Trägerkonsolen weist vorteilhafterweise nach oben. Die Befestigungselemente sind dann im Betrieb im wesentlichen nur horizontal und damit nur quer zur Verbindungsrichtung beansprucht. Die Trägerkonsolen stützen sich auf den Längsträgern ab, ohne hierbei die Verbindungselemente zu belasten. Die Verbindungselemente können beispielsweise Blindniete sein, welche in vorgefertigte oder beim Zusammenbau, z. B. durch die zweiten Durchbrüche als den zweiten Vorrichtungen als Bohrlehre, in der Befestigungsfläche des Längsträgers erzeugte Bohrungen eingesteckt werden. Nietverbindungen sind einfach herstellbar und besonders widerstandsfähig gegen im Betrieb auftretende Vibrationen. Andere geeignete Befestigungselemente sind dem Fachmann an sich bekannt. Vorteilhaft sind insbesondere auch selbstbohrende und selbstfurchende Schrauben, welche in einem Arbeitsgang in die Befestigungsfläche des Längsträgers eingedreht werden können.

Die Befestigungsfläche liegt vorteilhafterweise unmittelbar benachbart zu einem nach oben offenen Laufkanal für die Rollen, so daß auch für die Längsträger ein und dasselbe Profil sowohl für Schiebeverdeckanordnungen als auch für Festverdeckanordnungen benutzt werden kann. Damit können sowohl bei den Einheiten aus Trägerkonsolen und Querträgern als auch bei den Längsträgern Gleichteile für beide Verdeckvarianten Verwendung finden.

Die Befestigungsfläche weist vorteilhafterweise im Profilverlauf eine leichte mittige Absenkung gegenüber zwei seitlichen Auflagestreifen auf. Die Trägerkonsole ist in der Variante einer Faltverdeckanordnung durch Rollen in einem geringen vertikalen Abstand zu diesen Auflagestreifen geführt. Bei der Festverdeckvariante sind vorzugsweise die Rollen nicht vorhanden und die Trägerkonsole liegt auf den Auflagestreifen auf. Die zweiten Vorrichtungen zur Aufnahme von Befestigungselementen liegen der mittigen Absenkung der Befestigungsfläche gegenüber, so daß in dem Maß der Absenkung gegenüber den Auflagestreifen ein geringer Abstand zwischen Trägerkonsole und Befestigungsfläche verbleibt. Beim Einbringen der Befestigungselemente kann sich dabei, z. B. beim Anziehen einer Schraube als Befestigungselement, eine geringe elastische Durchbiegung der Befestigungsfläche im Längsträger und/oder der Trägerkonsole ergeben, aus welcher eine Vorspannung der Verbindung resultiert, welche insbesondere bei einer Verschraubung einem Lockern der Verbindung vorteilhaft entgegenwirkt.

Die Absenkung der Befestigungsfläche gegen zwei berandende Auflagestreifen ist zugleich vorteilhaft für die Verwendung desselben Trägerprofils für Aufbauten mit einer starren Dachplatte, wobei die Absenkung der Befestigungsfläche eine Klebernut für eine Klebeverbindung zwischen Längsträger und Dachplatte bilden kann und die Dachplatte wiederum auf den Auflagestreifen aufliegt.

In anderer Ausführung kann eine Verwendung von mit Rollen bestückten Trägerkonsolen auch für eine Festverdeckanordnung vorgesehen sein, indem in den bei der Rollenführung zwischen Befestigungsfläche und Trägerkonsole vorhandenen Abstand unter Anhebung der Konsole im Rahmen des gegebenen vertikalen Rollenführungsspiels ein Distanzelement zwischen Befestigungsfläche und Trägerkonsole eingefügt wird, welches die vertikal führenden Rollen in von der Lauffläche im Längsträger abgehobener Position hält. Diese Ausführungsform verwendet einheitlich vorgefertigte Querträgermodule einschließlich Rollen, erhöht aber die Bauhöhe um das Maß der Distanz zwischen Trägerkonsole und Befestigungsfläche.

Die Befestigungsfläche ist vorteilhafterweise durch eine Wand eines im Profil allseitig geschlossenen Kanals gebildet, so daß durch die für die Befestigungselemente einzuzbringenden Löcher in der Befestigungsfläche keine Beeinträchtigung der Belastbarkeit des Trägerprofils zu erwarten ist.

Die Trägerkonsolen, welche vorzugsweise aus ebenen Metallplatten durch Umformung hergestellt sind, weisen vorteilhafterweise noch weitere Vorrichtungen zur Befestigung einer Querausstufungsplatte in einer heckseitigen Schiebebrücke einer Faltverdeckanordnung auf, so daß dieselben Querträgermodule auch paarweise für eine solche Brücke, an welcher typischerweise einseitig der Kraftansatz zum Öffnen oder Schließen des Faltverdecks erfolgt, eingesetzt werden können.

Ferner sind vorteilhafterweise an den Trägerkonsolen Aufnahmen für zwischen benachbarten Laufwagen gelenkig aufstellbar verbundene Bügel ausgebildet, wobei die Lager für diese Bügel gegen eine obere Fläche der Trägerkonsole abgesenkt sind und damit die Bauhöhe nicht vergrößern. Die Aufnahmen für die Bügel weisen vorzugsweise zwei seitlich beabstandete Lager, insbesondere als Bohrungen in aus der oberen Fläche der Trägerkonsole nach unten umgebogenen Lagerlaschen auf. Die seitlich beabstandeten Lager eines Bügels schließen dabei vorzugsweise die Befestigungsfläche und den nach oben offenen Laufkanal zwischen sich ein.

Die Erfindung ist nachfolgend anhand bevorzugter Ausführungsbeispiele unter Bezugnahme auf die Abbildungen noch eingehend veranschaulicht. Dabei zeigt
- Fig. 1: eine Draufsicht auf eine Trägerkonsole mit Längsträger
- Fig. 2: eine Seitenansicht zu Fig. 1
- Fig. 3: eine Trägerkonsole mit Rollen in Längsrichtung des Längsträgers
- Fig. 4: eine auf dem Längsträger fixierte Trägerkonsole
- Fig. 5: eine andere Ausführung eines Längsträgerprofils

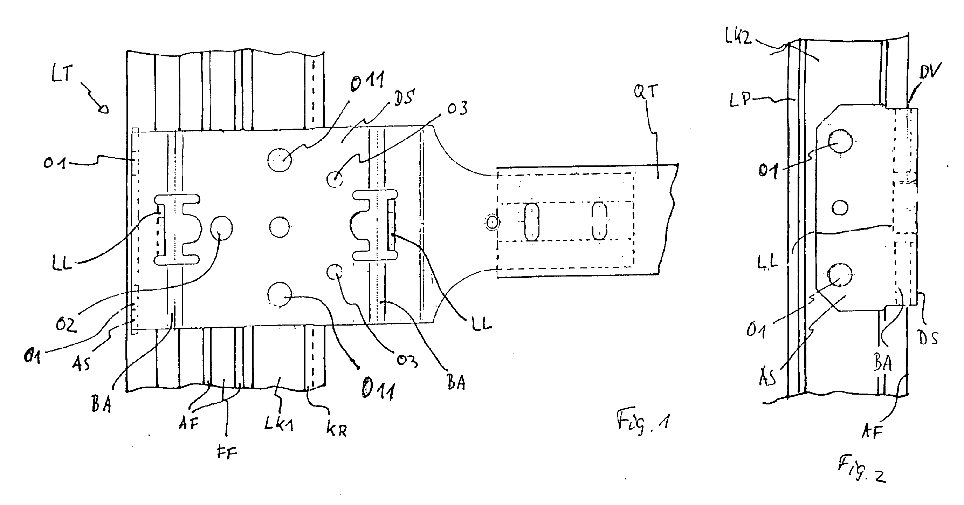

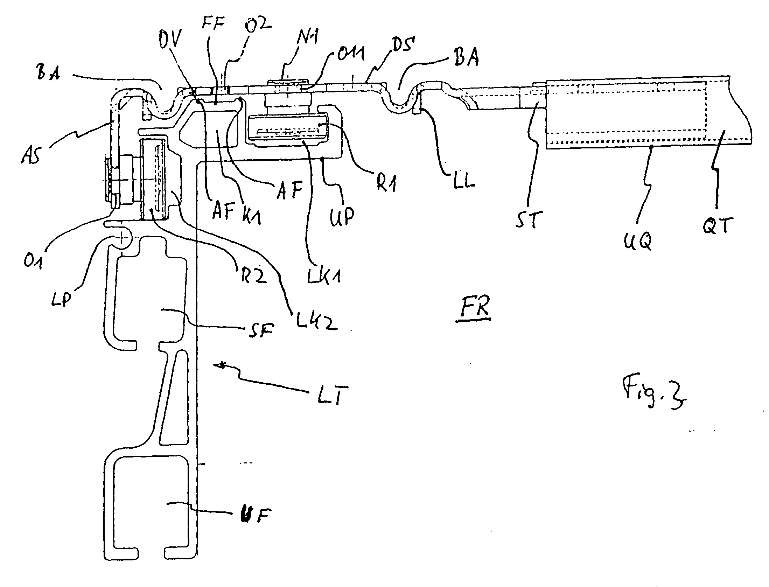

Fig. 1 zeigt eine Draufsicht auf eine Anordnung mit einer Trägerkonsole TK und einem Längsträger LT. Die Trägerkonsole ist durch Strukturierung und Umformung aus einer ebenen Metallplatte hergestellt und zeigt vorteilhafterweise eine an sich übliche gewinkelte Form mit einem in der Zeichnungsebene liegenden, horizontal verlaufenden oberen Schenkel DS und einem in die Zeichnungsebene hineinragenden, vertikal verlaufenden seitlichen Schenkel AS. Auf der dem seitlichen Schenkel entgegengesetzten Seite des oberen Schenkels ist die Trägerkonsole in einen Stutzen ST zur Verbindung mit einem Querträger QT fortgesetzt.

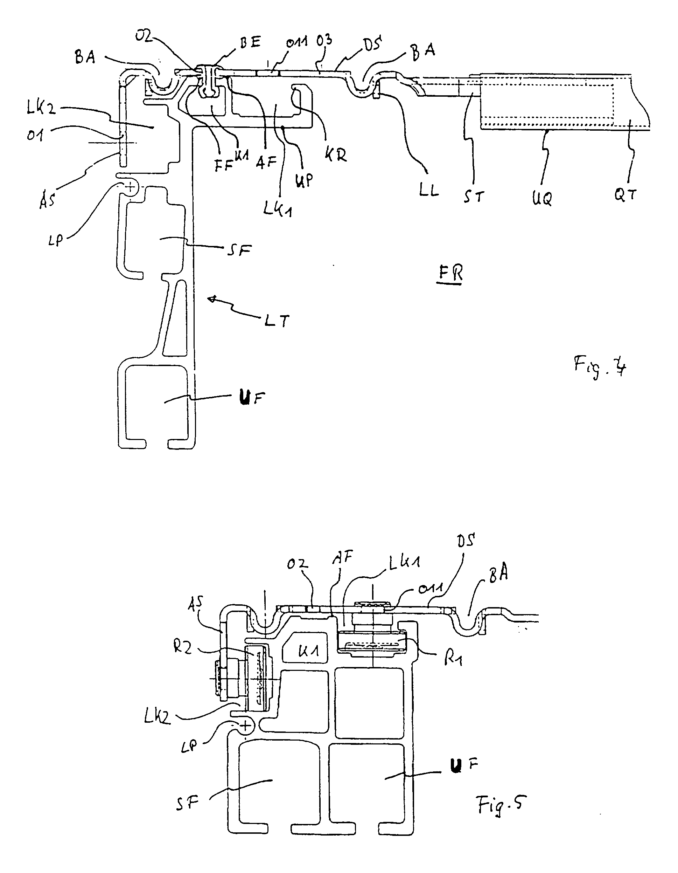

Die Struktur des seitlichen Schenkels AS ist in Fig. 2 veranschaulicht. In der im wesentlichen ebenen Fläche des Schenkels sind zwei in Längsrichtung des Längsträgers beabstandete erste Öffnungen O1 als erste Vorrichtungen zur Aufnahme von Laufrollen R2 bzw. Lagerachsen für diese Laufrollen vorgesehen. Die ersten Öffnungen O1 stehen einem seitlich dem Frachtraum FR abgewandt offenen Laufkanal LK2 im Längsträger gegenüber, in welchem die Laufrollen R2 geführt sind und das Gewicht der Verdeckanordnung auf der Lauffläche LF2 des Laufkanals LK2 abstützen.

Der obere Schenkel DS ist als im wesentlichen ebener Plattenabschnitt ausgeführt. Aus der Plattenebene sind Lagerlaschen LL für Scherenbügel einer Faltdachkonstruktion nach unten umgebogen und Bügelaufnahmen BA eingedrückt. In dem unverformten Bereich zwischen den seitlich beabstandeten Bügelaufnahmen sind in der Plattenebene weitere Öffnungen O11 zur Aufnahme von weiteren Laufrollen R1 bzw. Lagerachsen dieser Laufrollen und zweite Öffnungen O2 als zweite Vorrichtungen zur Aufnahme von Befestigungselementen eingebracht.

Die weiteren Öffnungen O11, welche vorzugsweise paarweise in Längsrichtung LR des Längsträgers beabstandet vorgesehen sind und auch als Teil der ersten Vorrichtungen betrachtet werden können, liegen über der Mitte eines im Längsträger LT ausgebildeten, nach oben offenen Laufkanals LK1. Seitlich neben dem Laufkanal LK1 setzt sich das Längsträgerprofil durch eine Befestigungsfläche FF fort, welche unter den Öffnungen O2 zur Aufnahme der Befestigungselemente liegt.

In der in Längsrichtung LR des Längsträgers LT dargestellten Ansicht der Fig. 3 ist die Trägerkonsole TK mit Rollen R1, R2 bestückt, welche in den Laufkanälen LK1, LK2 geführt sind. In der gezeigten Ansicht wird insbesondere die gewinkelte Form der Trägerkonsole deutlich, von deren vertikalem Schenkel AS Lagerachsen zu dem Längsträgerprofil hin gerichtet sind, auf welchen die Rollen R2 gelagert sind.

Die Orientierung der Trägerkonsole TK ist durch die horizontale Ausrichtung des einen Frachtraum FR zu dem gegenüberliegenden Längsträger überspannenden Querträgers QT vorgegeben. Die im Laufkanal LK1 geführten Rollen R1 stabilisieren den seitlichen Abstand der Längsträger. Die im Laufkanal LK2 geführten Rollen R2 tragen das Gewicht der Dachkonstruktion und bestimmen die vertikale Position der Trägerkonsole TK relativ zu dem Längsträger. Insbesondere ist durch die Rollen R2 der Abstand DV der Trägerkonsole vom Längsträger bestimmt. Der Abstand DV liegt typischerweise in der Größenordnung von 1 - 2 mm. Die Lagerlaschen LL und die Bügelaufnahmen BA liegen seitlich von Laufkanal LK1 und Befestigungsfläche FF und sind gegen die Ebene des oberen Schenkels abgesenkt, so daß sich eine besonders geringe Bauhöhe von Längsträgerprofil einschließlich Trägerkonsole über dem von den Querträgern QT überspannten Frachtraum FR ergibt.

Die Befestigungsfläche bildet eine nach oben weisende Wand eines im Profil allseitig geschlossenen Kanals K1 und ist in der Mitte leicht abgesenkt gegenüber zwei beidseitig verlaufenden Stegen AF, welche bei der in Fig. 4 skizzierten Festverdeckanordnung die Auflageflächen für die Trägerkonsole bilden.

Für eine Festverdeckanordnung entfällt insbesondere die Tragfunktion der Rollen R2 als vertikale Abstützung und die Trägerkonsolen liegen mit dem oberen Schenkel auf der Befestigungsfläche bzw. den stegförmigen Auflageflächen AF auf. Die Rollen R1 sowie die Lagerachsen für die Rollen können wie im Beispiel nach Fig. 4 gleichfalls entfallen. Ein durch die Öffnung O2 von der Oberseite der Trägerkonsole durchgestecktes Befestigungselement BE reicht durch die Befestigungsfläche FF hindurch bis in den Kanal K1. Das Befestigungselement BE kann beispielsweise wie skizziert ein Blindniet sein, welcher durch die Öffnung O2 und eine in deren Verlängerung in die Befestigungsfläche eingebrachte Bohrung durchgesteckt und durch Verformung im Kanal K1 festgelegt wird. Vorteilhaft ist auch die Verwendung von selbstbohrenden und selbstfurchenden Schrauben, welche in einem Arbeitsgang ohne Vorbohren eingedreht werden können.

Bei der Herstellung der festen Verbindung von Trägerkonsolen mit dem Längsträger über das Befestigungselement BE kann eine durch die abgesenkte Befestigungsfläche FF begünstigte Vorspannung der Verbindung erzeugt werden, was vorteilhaft für die dauerhafte Festigkeit der Verbindung ist.

Eine weitere nicht skizzierte Ausführungsform für feste Planenverdecke kann vorsehen, daß die Konsolen unverändert mit Rollen bestückt sind, daß aber durch Einfügen von Distanzelementen zwischen Befestigungsfläche FF und Trägerkonsole die Rollen R2 von der unteren Lauffläche des Laufkanals LK2 geringfügig abgehoben sind und das Gewicht der Verdeckkonstruktion über die Distanzelemente auf der Befestigungsfläche liegt. Die Herstellung der festen Verbindung erfolgt z. B. wie zu Fig. 4 beschrieben.

Durch die Ausrichtung der Befestigungsfläche nach oben wird das Gewicht der Verdeckkonstruktion durch die Auflageflächen AF der Längsträger aufgenommen und die Befestigungselemente sind im wesentlichen nur quer zu den verbundenen Flächen beansprucht.

Die Verwendung gleicher Baueinheiten von Trägerkonsolen und Querträgern sowohl für Faltverdecke als auch für Festverdecke ermöglicht darüber hinaus vorteilhaft die Benutzung von Befestigungseinrichtungen für Planen an den Trägerkonsolen auf einheitliche Weise.

Das Längsträgerprofil im oberen horizontalen Abschnitt mit dem Laufkanal LK1 und die Trägerkonsole mit dem Querträger QT sind im skizzierten Beispiel vorteilhaft so aufeinander abgestimmt, daß die innere Unterkante UP des Längsträgerprofils unter dem Laufkanal LK1 im wesentlichen in derselben Höhe liegt wie die Unterkante des Querträgers QT.

Im oberen Schenkel der Trägerkonsole sind zusätzlich weitere Öffnungen O3 vorgesehen, welche seitlich neben dem Laufkanal LK1 des Längsträgerprofils liegen und zur Befestigung einer Queraussteifungsplatte dienen.

In dem Längsträgerprofil können in an sich bekannter Weise zusätzlich ein Laufkanal SF für Laufrollen einer Seitenplane, ein Laufkanal UF für auf Rollen verschiebbare Rungen und eine Aufnahme LP für eine die Seitenplane oben überdeckende Gummilippe vorgesehen sein.

Die Fig. 5 zeigt eine weitere vorteilhafte Ausführung eines Längsträgerprofils, welches in anderer Anordnung im wesentlichen dieselben funktionellen Elemente aufweist wie das in Fig. 3 und Fig. 4 skizzierte Profil, so daß auf die dortigen Ausführungen verwiesen wird. In dem Profil sind dieselben Laufwagenkonsolen in derselben Weise wie beschrieben einsetzbar.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar, insofern diese Abwandlungen unter den Wortlaut der Ansprüche fallen.

## Patentansprüche

1. Aufbausystem für Verdecke, insbesondere Planenverdecke von Lastkraftwagenaufbauten, mit zwei in einer Längsrichtung parallel seitlich beabstandet verlaufenden Längsträgern (LT) und quer zu den Längsträgern zwischen diesen verlaufenden Querträgern (QT), welche beidseitig über Trägerkonsolen (TK) mit den Längsträgern (LT) verbindbar sind und sich dabei auf diesen abstützen und den seitlichen Abstand der Längsträger (LT) bestimmen, wobei
a) die Längsträger (LT) an wenigstens einer den Trägerkonsolen (TK) zugewandten Seite einen zu den Trägerkonsolen (TK) hin offenen ersten Laufkanal (LK2) aufweisen.
b) die Trägerkonsolen (TK) dem ersten Laufkanal (LK2) gegenüber positioniert erste Vorrichtungen (O1) zur Aufnahme von Rollen (R2) aufweisen.
c) die Längsträger (LT) an wenigstens einer den Trägerkonsolen (TK) zugewandten Seite eine Befestigungsfläche (FF) aufweisen.
d) die Trägerkonsolen (TK) der Befestigungsfläche (FF) gegenüber positioniert zweite Vorrichtungen (O2) zur Aufnahme von Befestigungselementen (BE) aufweisen.
e) alternativ
e1) die Trägerkonsolen (TK) durch an den ersten Vorrichtungen (O1) angeordnete Rollen (R2) in dem ersten Laufkanal (LK2) geführt sind und mittels der Rollen (R2) entlang der Längsträger (LT) verfahrbar sind oder
e2) Befestigungsetemente (BE) an den zweiten Vorrichtungen (O2) in die Befestigungsfläche (FF) der Längsträger (LT) eingreifen und die Trägerkonsolen (TK) auf den Längsträgern (LT) fixieren.

2. System nach Anspruch 1, **dadurch gekennzeichnet, daß** die Befestigungsfläche (FF) nach oben weist.

3. System nach Anspruch 2, **dadurch gekennzeichnet, daß** die Befestigungsfläche (FF) seitlich nach außen gegen einen nach oben offenen zweiten Laufkanal (LK1) versetzt ist.

4. System nach einem der Ansprüche 1 bis 3, **dadurch gekennzeichnet, daß** die Befestigungsfläche (FF) eine Teilwand eines im Längsträgerquerschnitt allseitig geschlossenen Kanals bildet.

5. System nach einem der Ansprüche 1 bis 4, **dadurch gekennzeichnet, daß** die zweiten Vorrichtungen (O2) zur Aufnahme von Befestigungselementen (BE) als Öffnungen (O2) in den Trägerkonsolen (TK) ausgebildet sind.

6. System nach einem der Ansprüche 1 bis 5, **dadurch gekennzeichnet, daß** im Falle der Alternative e2), Blindniete als Befestigungselemente (BE) verwendet werden.

7. System nach einem der Ansprüche 1 bis 5, **dadurch gekennzeichnet, daß** im Falle der Alternative e1), die ersten Vorrichtungen (O1) einseitig fest mit den Trägerkonsolen (TK) verbundene Lagerachsen für die Rollen (R2) umfassen.

8. System nach einem der Ansprüche 1 bis 7, **dadurch gekennzeichnet, daß** die Trägerkonsolen (TK) einstückig aus einer ebenen Metallplatte hergestellt sind.

9. System nach einem der Ansprüche 1 oder 2, **dadurch gekennzeichnet, daß** an den zwei Längsträgern (LT) jeweils zusätzlich zu dem ersten Laufkanal (LK2) ein nach einer anderen Seite offener zweiter Laufkanal (LK1) ausgebildet ist, wobei die Trägerkonsolen (TK) dem zweiten Laufkanal (LK1) gegenüber positionierte weitere Aufnahmen (O11) für weitere Rollen (R1) aufweisen und im Falle der Alternative e1 zur Verfahrung der Trägerkonsolen (TK) die Rollen (R1,R2) in beiden Laufkanälen (LK1,LK2) geführt sind.

10. System nach einem der Ansprüche 1 bis 9, **dadurch gekennzeichnet, daß** in den Trägerkonsolen Schwenklager und/oder Aufnahmen (LL) für Bügel einer Faltverdeckanordnung vorhanden sind.

11. System nach Anspruch 3 oder 9, **dadurch gekennzeichnet, daß** in den Trägerkonsolen (TK) Schwenklager und/oder Aufnahmen (LL) für Bügel einer Faltverdeckanordnung vorhanden sind und daß die Schwenklager und/oder Aufnahmen (LL) eines Bügels seitlich voneinander beabstandet sind und den nach oben offenen zweiten Laufkanal (LK1) sowie die Befestigungsfläche (FF) zwischen sich einschließen.

12. System nach Anspruch 10 oder 11, **dadurch gekennzeichnet, daß** die Schwenklager und/oder Aufnahmen (LL) gegenüber horizontalen Trägerflächen der Trägerkonsolen (TK), in welchen die zweiten Vorrichtungen (O2) vorgesehen oder befestigt sind, abgesenkt sind.

## Claims

1. Mounting system for soft tops, in particular tarpaulins of lorry superstructures, with two longitudinal members (LT) running parallel at a lateral distance apart in a longitudinal direction and cross members (QT) which run transversely to the longitudinal members between the latter, can be connected to the longitudinal members (LT) on both sides via support brackets (TK) and are supported on the said longitudinal members and determine the lateral distance between the longitudinal members (LT),
a) the longitudinal members (LT) having a first running channel (LK2), which is open towards the support brackets (TK), on at least one side facing the support brackets (TK),
b) the support brackets (TK) having first devices (O1), which are positioned opposite the first running channel (LK2), for receiving rollers (R2),
c) the longitudinal members (LT) having a fastening surface (FF) on at least one side facing the support brackets (TK),
d) the support brackets (TK) having second devices (O2) positioned opposite the fastening surface (FF), for receiving fastening elements (BE),
e) alternatively
e1) the support brackets (TK) being guided in the first running channel (LK2) by rollers (R2) arranged on the first devices (O1) and being movable along the longitudinal members (LT) by means of the rollers (R2), or
e2) fastening elements (BE) on the second devices (O2) engaging in the fastening surface (FF) of the longitudinal members (LT) and fixing the support brackets (TK) on the longitudinal members (LT).

2. System according to Claim 1, **characterized in that** the fastening surface (FF) points upwards.

3. System according to Claim 2, **characterized in that** the fastening surface (FF) is offset laterally outwards towards an upwardly open, second running channel (LK1).

4. System according to one of Claims 1 to 3, **characterized in that** the fastening surface (FF) forms a partial wall of a channel which is closed on all sides in the longitudinal-member cross section.

5. System according to one of Claims 1 to 4, **characterized in that** the second devices (O2) for receiving fastening elements (BE) are designed as openings (O2) in the support brackets (TK).

6. System according to one of Claims 1 to 5, **characterized in that**, in the case of the alternative e2), blind rivets are used as fastening elements (BE).

7. System according to one of Claims 1 to 5, **characterized in that**, in the case of the alternative e1), the first devices (O1) comprise bearing axles connected fixedly to the support brackets (TK) on one side for the rollers (R2).

8. System according to one of Claims 1 to 7, **characterized in that** the support brackets (TK) are produced as a single piece from a flat metal plate.

9. System according to either of Claims 1 and 2, **characterized in that** on the two longitudinal members (LT) there is formed, in addition to the first running channel (LK2), a second running channel (LK1) which is open to another side, the support brackets (TK) having, positioned opposite the second running channel (LK1), further receptacles (O11) for further rollers (R1) and, in the case of the alternative e1, the rollers (R1, R1) are guided in both running channels (LK1, LK2) in order to move the support brackets (TK).

10. System according to one of Claims 1 to 9, **characterized in that**, in the support brackets, there are pivot bearings and/or receptacles (LL) for bows of a folding soft top arrangement.

11. System according to Claim 3 or 9, **characterized in that**, in the support brackets (TK), there are pivot bearings and/or receptacles (LL) for bows of a folding soft top arrangement, and **in that** the pivot bearings and/or receptacles (LL) of a bow are spaced apart laterally from one another and enclose the upwardly open, second running channel (LK1) and the fastening surface (FF) between them.

12. System according to Claim 10 or 11, **characterized in that** the pivot bearings and/or receptacles (LL) are lowered in relation to horizontal support surfaces of the support brackets (TK) in which the second devices (O2) are provided or fastened.

## Revendications

1. Système de montage pour capotes, notamment pour des bâches pour carrosserie de camions, avec deux longerons (LT) s'étendant à la parallèle dans le sens longitudinal à une distance latérale et avec des traverses (QT) s'étendant à la transversale des longerons entre ces derniers, que l'on peut relier des deux côtés avec les longerons (LT) par l'intermédiaire de consoles de support (TK) et qui à cet effet, s'appuient sur ces dernières, tout en déterminant la distance latérale entre les longerons (LT),
a) les longerons (LT) comportant sur au moins un côté dirigé vers les consoles de support (TK) un premier conduit de roulement (LK2) ouvert sur les consoles de support (TK).
b) les consoles de support (TH) comportant des premiers dispositifs (O1) de logement de galets (R2) positionnés à l'opposée du premier conduit de roulement (LK2).
c) les longerons (LT) comportant sur au moins un côté dirigé vers les consoles de support (TK) une surface de fixation (FF).
d) les consoles de support (TK) comportant des deuxièmes dispositifs (O2) positionnés à l'opposée de la surface de fixation (FF) pour le logement d'éléments de fixation (BE).
e) en variante,
e1) les consoles de support (TK) étant guidées dans le conduit de roulement (LK2) par des galets (R2) disposés sur les premiers dispositifs (O1) et pouvant se déplacer au moyen des galets (R2) le long des longerons (LT) ou
e2) des éléments de fixation (BE) sur les deuxièmes dispositifs (O2) s'engageant dans la surface de fixation (FF) des longerons (LT) et fixant les consoles de support (TK) sur les longerons (LT).

2. Système selon la revendication 1, **caractérisé en ce que** la surface de fixation (FF) est dirigée vers le haut.

3. Système selon la revendication 2, **caractérisé en ce que** la surface de fixation (FF) est déportée latéralement vers l'extérieur contre un deuxième conduit de roulement (LK1) ouvert sur le dessus.

4. Système selon l'une quelconque des revendications 1 à 3, **caractérisé en ce que** la surface de fixation (FF) forme une paroi partielle d'un conduit fermé de toutes parts dans la section transversale du longeron.

5. Système selon l'une quelconque des revendications 1 à 4, **caractérisé en ce que** les deuxièmes dispositifs (O2) pour le logement d'éléments de fixation (BE) sont conçus sous la forme d'orifices (O2) dans les consoles de support (TK).

6. Système selon l'une quelconque des revendications 1 à 5, **caractérisé en ce que** dans le cas de la variante e2), on utilise des rivures à rivets borgnes en tant qu'éléments de fixation (BE).

7. Système selon l'une quelconque des revendications 1 à 5, **caractérisé en ce que** dans le cas de la variante e1), les premiers dispositifs (O1) comprennent des axes de palier pour les galets (R2) fixement reliés d'un côté avec les consoles de support (TK) .

8. Système selon l'une quelconque des revendications 1 à 7, **caractérisé en ce que** les consoles de support (TK) sont fabriquées en monobloc dans une plaque métallique plane.

9. Système selon l'une quelconque des revendications 1 ou 2, **caractérisé en ce que** sur les deux longerons (LT), en supplément du premier conduit de roulement (LK2) est conçu un deuxième conduit de roulement (LK1) ouvert sur un autre côté, les consoles de support (TK) comportant des logements supplémentaires (O11) pour des galets supplémentaires (R1) positionnés à l'opposée du deuxième conduit de roulement (LK1) et **en ce que** dans le cas de la variante e1), les galets (R1, R2) sont guidés dans les deux conduits de roulement (LK1, LK2) pour le déplacement des consoles de support (TK).

10. Système selon l'une quelconque des revendications 1 à 9, **caractérisé en ce que** des appuis pivotants et/ou des logements (LL) pour des étriers d'un agencement de capote pliable sont présents dans les consoles de support.

11. Système selon la revendication 3 ou 9, **caractérisé en ce que** des appuis pivotants et/ou des logements (LL) pour des étriers d'un agencement de capote pliable sont présents dans les consoles de support (TK) et **en ce que** les appuis pivotants et/ou les logements (LL) d'un étrier sont latéralement espacés et renferment entre eux le deuxième conduit de roulement (LK1) ouvert sur le dessus, ainsi que la surface de fixation (FF).

12. Système selon la revendication 10 ou 11, **caractérisé en ce que** les appuis pivotants et/ou les logements (LL) sont abaissés par rapport à des surfaces porteuses horizontales des consoles de support (TK) dans lesquelles les deuxièmes dispositifs (O2) sont prévus ou fixés.
